# EUROPÄISCHE PATENTSCHRIFT

(11) **EP 1 907 190 B1**
(45) Veröffentlichungstag und Bekanntmachung des Hinweises auf die Patenterteilung: **23.09.2015**
(21) Anmeldenummer: 06775727.8
(22) Anmeldetag: 17.07.2006
(51) Int. Cl.: B29C 49/56, B29C 33/26, B29C 49/06, B29C 49/36, B29C 49/48

(54) **VERFAHREN UND VORRICHTUNG ZUR BLASFORMUNG VON BEHÄLTERN MIT EINER SCHRÄG ORIENTIERTEN TRENNEBENE DER BLASFORMSEGMENTE**
METHOD AND DEVICE FOR BLOW-MOULDING CONTAINERS
PROCEDE ET DISPOSITIF DE SOUFFLAGE DE RECIPIENTS

(30) Priorität: 23.07.2005 DE 102005034541
(43) Veröffentlichungstag der Anmeldung: 09.04.2008
(73) Patentinhaber: KHS Corpoplast GmbH, 22145 Hamburg (DE)
(72) Erfinder: LINKE, Michael, 22047 Hamburg (DE); LITZENBERG, Michael, 21502 Geesthacht (DE); BAUMGARTE, Rolf, 22926 Ahrensburg (DE); LEWIN, Frank, 22889 Tangstedt (DE); CHOINSKI, Julian, 22359 Hamburg (DE)
(74) Vertreter: Hausfeld, Norbert
(86) Internationale Anmeldenummer: PCT/DE2006/001270
(87) Internationale Veröffentlichungsnummer: WO 2007/012309

(56) Entgegenhaltungen:
- EP-A- 1 520 681
- WO-A-2006/056437
- WO-A-2007/006908
- DE-U1-202004 017 530
- FR-A- 2 843 714
- US-A1- 2004 151 797

## Beschreibung

Die Erfindung betrifft ein Verfahren zur Blasformung von Behältern, bei dem Vorformlinge aus einem thermoplastischen Material im Bereich einer Heizstrecke erwärmt und anschließend an eine Blaseinrichtung übergeben werden, in der die Vorformlinge durch Einwirkung eines Blasdruckes innerhalb von Blasformen, die aus mindestens zwei Blasformsegmenten bestehen, zu den Behältern umgeformt werden und bei dem die Vorformlinge gemeinsam und mit den Blasformen mindestens entlang eines Teiles eines Umlaufweges eines rotierenden Blasrades transportiert werden.

Die Erfindung betrifft darüber hinaus eine Vorrichtung zur Blasformung von Behältern, die eine Heizstrecke zur Erwärmung von Vorformlingen aus einen thermoplastischen Material aufweist und die mit einer Blaseinrichtung versehen ist, die mindestens eine auf einem Blasrad angeordnete Blasstation zur Umformung der Vorformlinge in die Behälter aufweist, sowie bei der die Blasstation mit Formträgern versehen ist, die jeweils Blasformsegmente haltern und bei der ein erster Formträger relativ zu einem zweiten Formträger um eine Drehachse herum beweglich angeordnet ist.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE -OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Klemmdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Ständig zunehmende Anforderungen an die Leistungsfähigkeit der Blasmaschinen führen dazu, daß Blasräder mit einer relativ großen Anzahl von Blasstationen verwendet werden und daß die Blasräder relativ schnell rotieren. Die große Anzahl der Blasstationen führt zu einem großen Durchmesser der Blasräder und die hohen Drehzahlen führen zu starken Brems- und Beschleunigungskräften aufgrund der kinetischen Energie der bewegten Massen.

Zur Verringerung dieser nachteiligen Effekte ist bereits vorgeschlagen worden, die Blasräder mit einer kompakten Anordnung von Blasstationen zu konstruieren. Eine Vielzahl von Konstruktionsvarianten sind in der DE-OS 199 48 474 beschrieben. Bislang konnte allerdings noch keine Konstruktion gefunden werden, die eine verbesserte Kompaktheit des Blasrades bei gleichzeitig einfacher mechanischer Grundkonstruktion ermöglicht.

In der DE-OS 103 46 089.6 wird die Anordnung von Blasstationen auf einem rotierenden Blasrad beschrieben, bei der eine Trennebene der Blasformsegmente entgegen einer Bewegungsrichtung des Blasrades schräg nach hinten orientiert ist. Zur Durchführung von Ein- und Ausgabevorgängen werden beide Blasformsegmente aufgeschwenkt und hierdurch ein Zugang zum Inneren der Blasstation ermöglicht.

In der EP-A-1 520 681, entsprechend den Oberbegriffen der Ansprüche 1 und 11, wird eine Blasmaschine mit einem Blasrad beschrieben, bei dem Blasstationen mit einer Formtrennebene in einer radialen Richtung des Blasrades angeordnet sind. Bei einem Öffnen der Blasformen werden relativ zueinander unterschiedliche Öffnungswinkel der jeweiligen Blasformhälften realisiert.

Aus der DE 20 2004 017 530 ist ein Blasrad bekannt, bei dem ein Formträger unbeweglich am Blasrad angeordnet ist und ein zweiter Formträger von einer Kniehebelanordnung positioniert wird. Trennebenen der Blasstationen sind in einer radialen Richtung des Blasrades orientiert.

In der FR-A-2 843 714 wird eine weitere Konstruktion einer Blasstation mit einer in einer radialen Richtung des Blasrades angeordneten Trennebene beschrieben. Ein Öffnen und Schließen der Blasstation erfolgt unter Verwendung einer Kurvensteuerung.

Die US 2004/151797 beschreibt eine Öffnungs- und Schließbewegung von Blasformträgern unter Verwendung seitlicher Schwenkgelenke und eines Schubmechanismus.

Aufgabe der vorliegenden Erfindung ist es, ein Verfahren der einleitend genannten Art derart zu verbessern, daß eine Optimierung der kinematischen Abläufe der Blasmaschine unterstützt wird.

Diese Aufgabe wird erfindungsgemäß dadurch gelöst, daß eine Trennebene der Blasformsegmente mindestens in einem geöffneten Zustand der Blasstation in einer Rotationsrichtung des Blasrades schräg nach vorne weisend derart mit einem Neigungswinkel relativ zu einer radialen Bezugsebene des Blasrades mindestens zeitweilig während der Durchführung eines Übergabevorganges in einer Umfangsrichtung des Blasrades bewegt wird, daß der Neigungswinkel in einem geschlossenen Zustand der Blasstation in einem Winkelbereich von 5 bis 45 Grad relativ zur radialen Bezugsebene positioniert wird, daß ein Formträger eines der Blasformsegmente unbeweglich mit dem Blasrad verbunden wird und daß ein Formträger des in einer radialen Richtung des Blasrades weiter außen angeordnete Blasformsegmentes relativ zum Blasrad unbeweglich vom Blasrad transportiert wird.

Weitere Aufgabe der vorliegenden Erfindung ist es, eine Vorrichtung der einleitend genannten Art derart zu konstruieren, daß ein kompakter und preiswerter Aufbau des Blasrades bei verbesserter Verteilung der rotierenden Massen bereitgestellt wird.

Diese Aufgabe wird erfindungsgemäß dadurch gelöst, daß eine Trennebene der Blasformsegmente mindestens in einem geöffneten Zustand der Blasstation in einer Rotationsrichtung des Blasrades schräg nach vorne weisend derart mit einem Neigungswinkel relativ zu einer radialen Bezugsebene des Blasrades angeordnet ist, daß der Neigungswinkeln in einem geschlossenen Zustand der Blasstation einen Wert im Intervall von 5 Grad bis 45 Grad aufweist, daß ein fest mit dem Blasrad verbundener Formträger schräg zur radialen Bezugsebene angeordnet ist und daß ein in einer radialen Richtung des Blasrades weiter außen liegender Formträger unbeweglich mit dem Blasrad verbunden ist.

Die Anordnung der Blasstation mit der Trennebene in der Rotationsrichtung des Blasrades schräg nach vorne weisend bedeutet, daß ein bezüglich der Mitte des Blasrades außenseitiger Teil der Trennebene in der Bewegungsrichtung des Blasrades voreilend relativ zu dem bezüglich des Zentrums des Blasrades weiter innen liegenden Teil der Trennebene angeordnet ist. Diese Anordnung führt zwar zu einer komplizierteren Kinematik bei der Durchführung von Ein- und Ausgabevorgängen, der Abstand zwischen zwei Blasstationen kann jedoch gegenüber dem Stand der Technik erheblich reduziert werden, da die Blasformsegmente nicht seitlich aufschwenken, sondern die Schwenkbewegung mit einer radialen Komponente durchgeführt wird. Insbesondere kann das relativ zum anderen Blasformsegmente weiter innen liegende Blasformsegment in Richtung auf das Zentrum des Blasrades verschwenkt werden.

Der prinzipielle Handhabungsnachteil bei der Durchführung von Ein- und Ausgabevorgängen durch die Schrägstellung der Trennebene wird zu einem erheblichen Teil dadurch wieder kompensiert, daß die Neigung der Trennebene von außen betrachtet in einer Bewegungsrichtung des Blasrades nach vorne weist. Es wurde hierbei berücksichtigt, daß die Eingabe der relativ kleinen Vorformlinge aufgrund ihres geringen Außenvolumens einfach und die Ausgabe der geblasenen Behälters aufgrund deren größeren Außenvolumens vergleichsweise kompliziert ist. Durch die Schrägstellung der Trennebene außenseitig schräg nach vorne weisend wird die Ausgabe der großen Behälter durch die Überlagerung der Ausgabebewegung und der Bewegungsrichtung des Blasrades gegenüber einer Ausgabe in einer radialen Richtung erleichtert und die Eingabe der vergleichsweise kleinen Vorformlinge verkompliziert. Unter Verwendung von beispielsweise verschwenkbaren und teleskopierbaren Übergabeeinrichtungen kompensieren sich hierdurch die Vor- und Nachteile der Ein- und Ausgabevorgänge, so daß im Ergebnis der wesentlich kompakteren Konstruktion des Blasrades keine nennenswerten Gesamtnachteile gegenüberstehen.

Eine einfache Steuerbarkeit wird dadurch unterstützt, daß eine Verspannung der Blasformsegmente relativ zueinander durch eine pneumatische Verspannung bereitgestellt wird.

Zur Unterstützung einer einfachen Kinematik bei der Durchführung einer Eingabe der Vorformlinge sowie einer Entnahme der Behälter wird vorgeschlagen, daß die Blasstation mit einer Trennebene der Blasformsegmente derart angeordnet ist, daß die Trennebene in einem geschlossenen Zustand der Blasstation schräg zu einer radialen Bezugsebene des Blasrades positioniert ist.

Insbesondere erweist es sich bei einer Materialhandhabung als vorteilhaft, daß ein fest mit dem Blasrad verbundener Formträger schräg zur radialen Bezugsebene angeordnet ist.

Eine bevorzugte Ausführungsform wird dadurch bereitgestellt, daß eine Drehachse eines beweglichen Blasformsegmentes im wesentlichen vertikal angeordnet ist.

Ein einfacher Materialumlauf wird auch dadurch unterstützt, daß die Blasstation zur Aufnahme von mit ihren Mündungsabschnitten in lotrechter Richtung nach oben orientierten Vorformlingen ausgebildet ist.

Darüber hinaus ist es aber auch möglich, daß die Blasstation zur Aufnahme von mit ihren Mündungsabschnitten in lotrechter Richtung nach unten orientierten Vorformlingen ausgebildet ist.

Eine hohe Modularität des Gesamtaufbaus kann dadurch erreicht werden, daß entlang eines Außenumfanges des Blasrades abwechselnd fest mit dem Blasrad verbundene Formträger sowie relativ zum Blasrad beweglich angeordnete Formträger positioniert sind.

Eine kompakte Gestaltung bei guter Zugänglichkeit kann dadurch erreicht werden, daß das in einer radialen Richtung des Blasrades weiter außen angeordnete Blasformsegment relativ zum Blasrad unbeweglich vom Blasrad transportiert wird.

Zu einer stabilen Konstruktion trägt es bei, daß die Positionierung des mindestens einen Blasformsegmentes unter Verwendung eines Kniehebels durchgeführt wird.

Ein guter Kompromiß zwischen einer kompakten Gestaltung und einer guten Zugänglichkeit wird dadurch bereitgestellt, daß der Neigungswinkel in einem geschlossenen Zustand der Blasstation in einem Winkelbereich von 5 bis 45 Grad, bevorzugt von 10 bis 40 Grad, relativ zur radialen Bezugsebene positioniert wird.

Insbesondere ist daran gedacht, daß der Neigungswinkel relativ zur radialen Bezugsebene mit einer Schrägstellung von etwa 15 bis 30 Grad, bevorzugt 20 bis 30 Grad, positioniert wird.

Als besonders vorteilhaft erweist es sich, daß der Neigungswinkel relativ zur radialen Bezugsebene mit einer Schrägstellung von etwa 20 oder etwa 25 Grad positioniert wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine teilweise Draufsicht auf ein Blasrad mit mehreren nebeneinander angeordneten Blasstationen in einem vollständig geschlossenen Zustand und
- Fig. 6: die Anordnung gemäß Fig. 5 nach einem vollständigen Öffnen der Blasstationen.

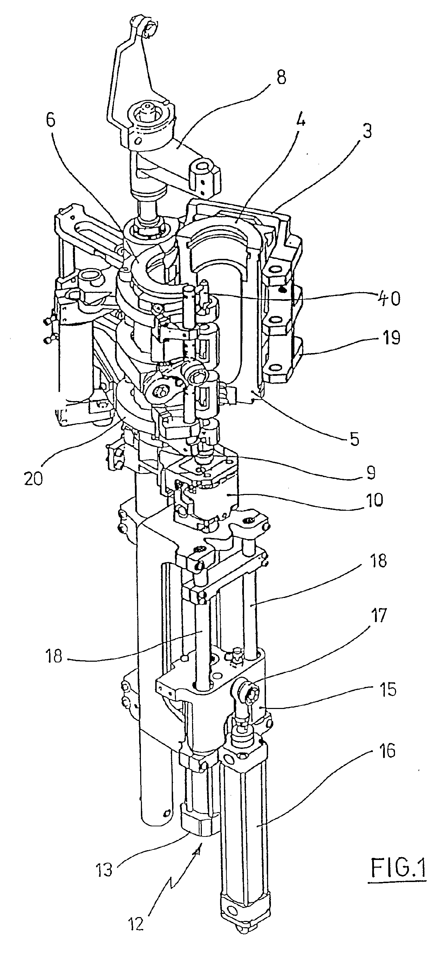

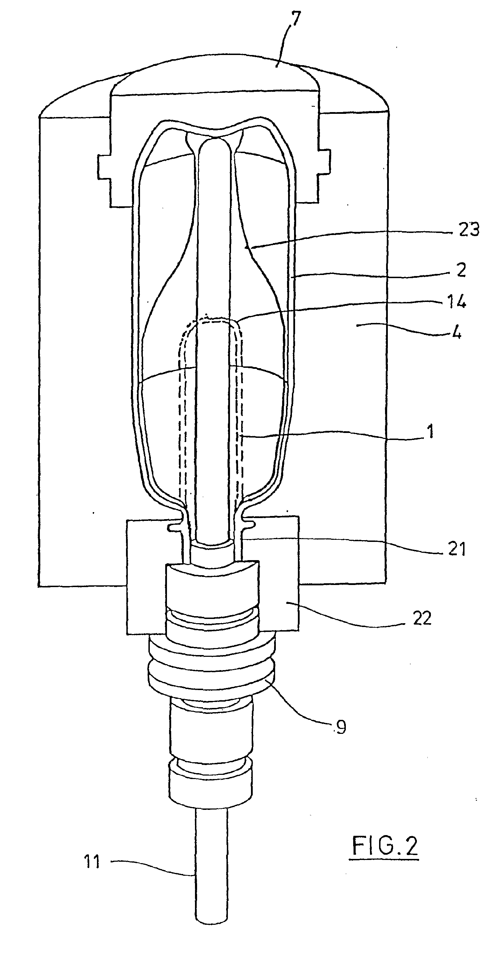

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Ver-wendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

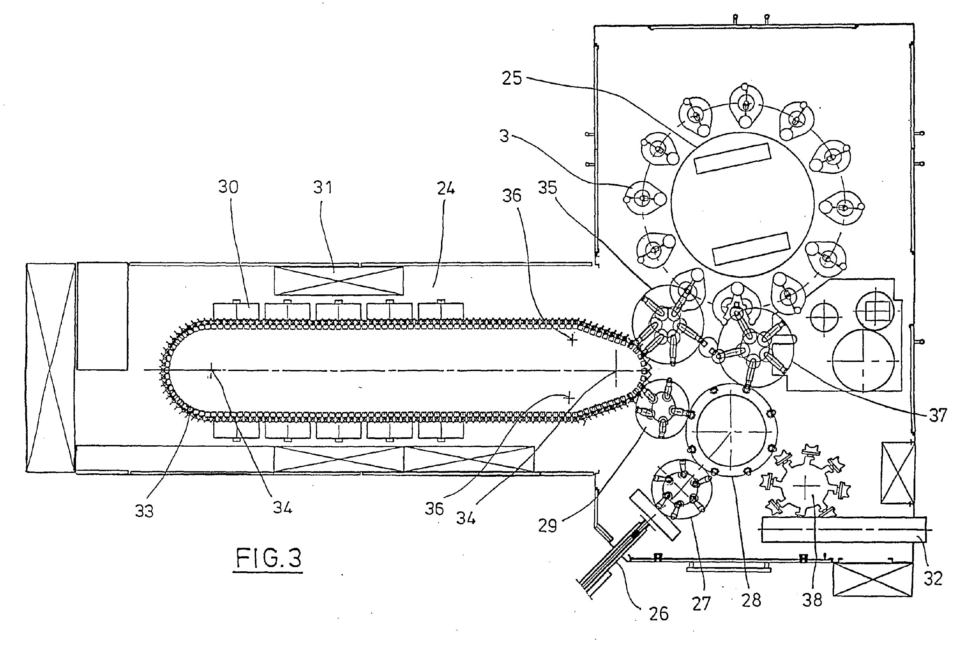

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesent-lichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

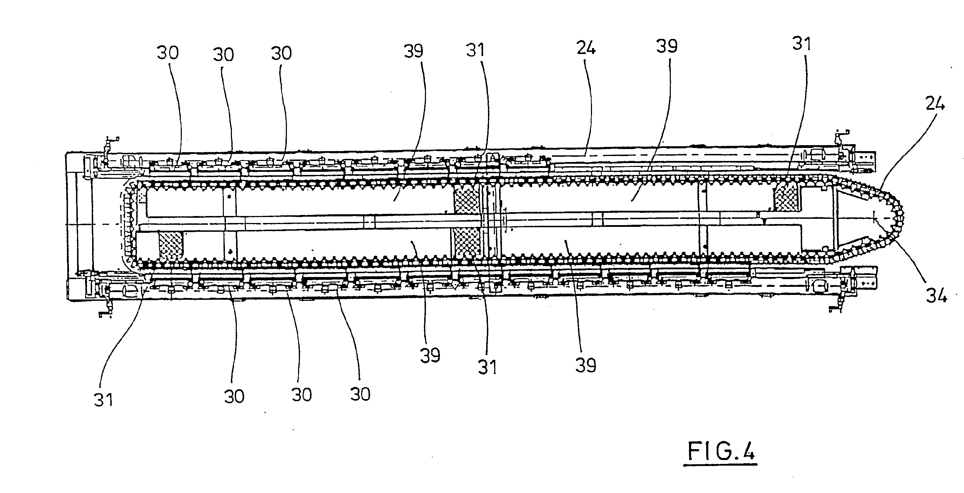

In der in Fig. 4 dargestellten modifizierten Heizstrekke (24) können durch die größere Anzahl von Heizstrahlern (30) eine größere Menge von Vorformlingen (1) je zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

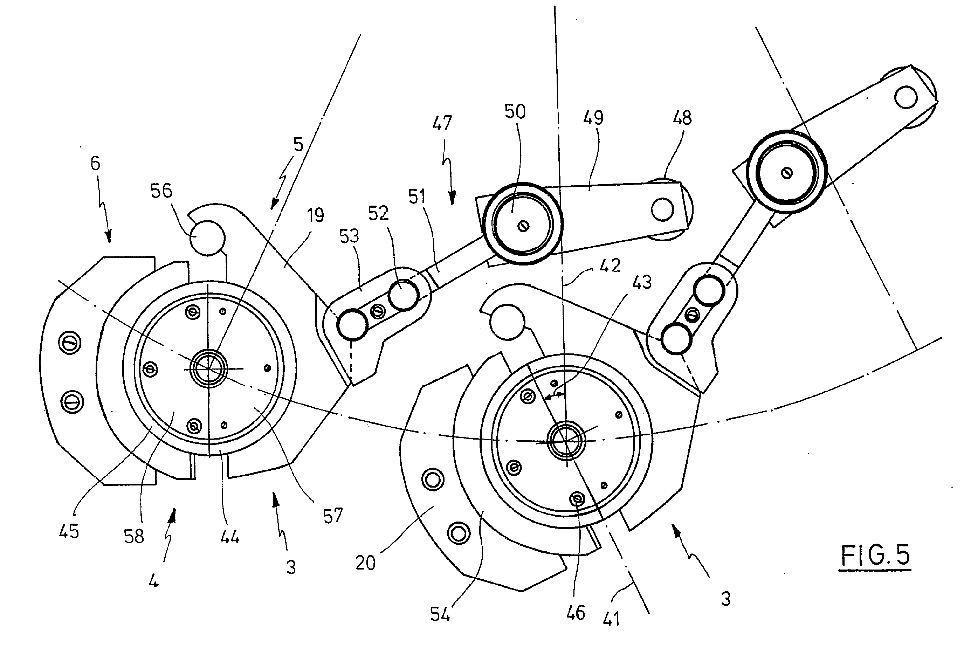

Gemäß der Ausführungsform in Fig. 5 sind entlang eines Umfanges des Blasrades (25) eine Mehrzahl von Blasstationen (3) angeordnet. Die Formhälften (5) sind relativ zu einer Drehachse (56) verschwenkbar angeordnet und die Formhälften (6) sind starr mit dem Blasrad (25) verbunden. Eine Trennebene (41) der Blasstation (3) ist relativ zu einer radialen Bezugsebene (42) des Blasrades (25) um einen Neigungswinkel (43) schräg gestellt.

Gemäß der Ausführungsform in Fig. 5 bestehen die Blasformen aus äußeren Formschalen (44, 45) sowie inneren Formschalen (57, 58), die mit der Kontur des herzustellenden Behälters (2) versehen sind. Die äußeren Formschalen (44, 45) weisen Temperiermittelkanäle (46) auf, um die Blasform (4) anwendungsabhängig zu beheizen oder zu kühlen.

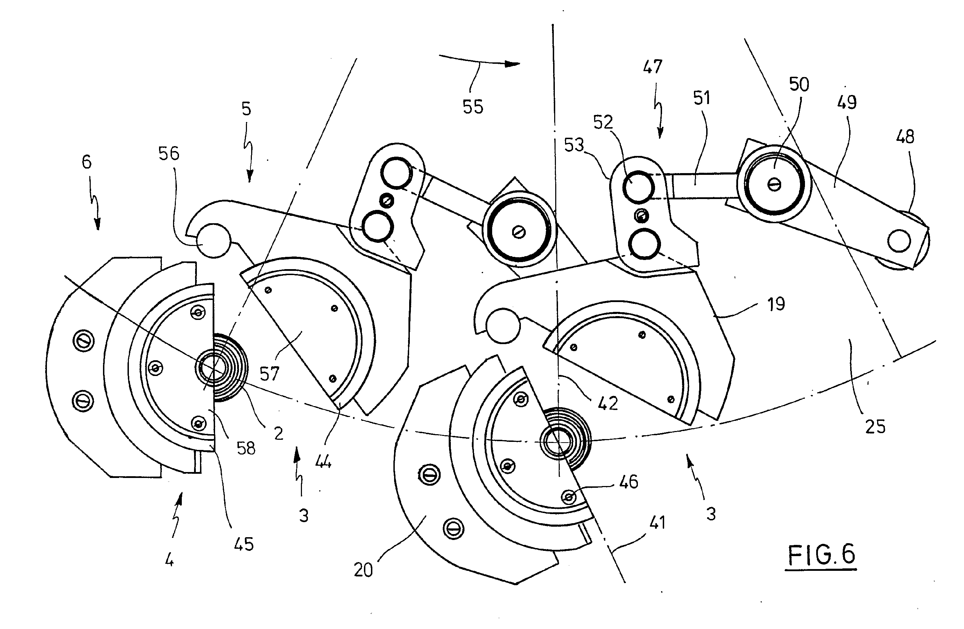

Gemäß dem in Fig. 6 dargestellten Betriebszustand der Blasstation (3) mit einer maximalen Öffnung grenzen die Formträger (19) der einen Blasstation (3) gegen die Formträger (20) der benachbarten Blasstation (3) bzw. sind mit einem geringen Abstand zum jeweils benachbarten Formträger angeordnet. Zur Durchführung einer Positionierbewegung der verschwenkbaren Formträger (19) wird eine Positioniereinrichtung (47) verwendet, die vorzugsweise kurvengesteuert betätigbar ist. Eine in Fig. 5 und Fig. 6 nicht dargestellte Kurvensteuerung ist hierbei über eine Steuerwelle (48) mit einem Anlenkhebel (49) verbunden, der über ein Schwenkgelenk (50) mit einem Steuerhebel (51) gekoppelt ist. Der Steuerhebel (51) ist über ein Schwenkgelenk (52) mit einem Stützhebel (53) gekoppelt.

Zurückkommend auf den in Fig. 5 dargestellten geschlossenen Betriebszustand der Blasstation (3) ist zu erkennen, daß eine Mittellinie des Steuerhebels (51) im wesentlichen durch Mittelpunkte des Schwenkgelenkes (52) und des Schwenkgelenkes (50) verläuft. Hierdurch ist es möglich, in einfacher Weise Kräfte bei einer Verspannung der Formträger (19, 20) relativ zueinander aufzunehmen.

Die Verspannung der Formträger (19, 20) gegeneinander kann beispielsweise unter Verwendung einer Druckeinrichtung (54) durchgeführt werden, die gemäß einem Ausführungsbeispiel von einem pneumatischen Druckmedium beaufschlagbar ist. Die Druckeinrichtung (54) ist hierbei zwischen dem Formträger (20) und der äußeren Formschale (45) angeordnet. In einem geschlossenem Zustand der Blasstation (3) wird bei einer Druckbeaufschlagung der Druckeinrichtung (54) die äußere Formschale (45) vom Formträger (20) weggedrückt und hierdurch eine Verspannung der inneren Formschalen (57, 58) relativ zueinander verursacht. Die Spannkräfte sind hierbei mindestens so groß, wie die Expansionskräfte, die bei einer Blasverformung der Behälter (2) auf die inneren Formschalen (57, 58) einwirken.

Gemäß einer weiteren Ausführungsform ist auch daran gedacht, die Hebel (51, 53) als Kniehebel mit einer sogenannten Übertotpunktlage auszubilden. Bei einer derartigen Ausführungsform wird ein zusätzlicher seitlicher Anschlag für die Hebel (51, 53) vorgesehen, gegen den die Hebel (51, 53) bei einer Druckbeaufschlagung gedrückt werden. Eine derartige Ausführungsform führt zu einer Selbstblockierung des Systems bei einer Druckbeaufschlagung und vermeidet sicher auch bei einem Auftreten von Fertigungstoleranzen Kräfte, die zu einer unbeabsichtigten Öffnung der Blasstation (3) führen könnten.

Die Dimensionierung des Neigungswinkels (43) erfolgt vorzugsweise in einem Bereich von 5 bis 45 Grad, stärker bevorzugt in einem Bereich von 15 bis 30 Grad. Als optimaler Kompromiß zwischen einer Handhabung der Vorformlinge (1) und der Behälter (2) und einer möglichst großen Kompaktheit des Blasrades (25) durch eine weitgehende nach innen gerichtete Verschwenkbarkeit eines der Formträger (19, 20) erweist sich ein Neigungswinkel (43) von etwa 20 Grad.

Gemäß der in Fig. 6 dargestellten geöffneten Positionierung der Blasstation (3) wurde der Anlenkhebel (49) verschwenkt und hierdurch ebenfalls eine Verschwenkung des Steuerhebels (51) und damit des Formträgers (19) verursacht. Der Formträger (19) wird hierdurch am unbeweglichen Formträger (20) der benachbarten Blasstationen (3) vorbei in Richtung auf einen Innenraum des Blasrades (25) verschwenkt.

Fig. 6 veranschaulicht ebenfalls noch einmal, daß die Blasstation (3) bezüglich einer Drehrichtung (55) des Blasrades (25) nach vorne weisend geöffnet ist. Hierdurch wird die einleitend bereits beschriebene Optimierung der Entnahmevorgänge der geblasenen Behälter (2) unterstützt.

Alternativ zu der in den Ausführungsbeispielen dargestellten Anordnung der Blasstation (3) mit einem relativ zu einem Blasrad (25) unbeweglichen äußeren Formträger (20) ist es auch möglich, den äußeren Formträger (20) beweglich und den inneren Formträger (19) unbeweglich anzuordnen. Hierdurch wird die Zugänglichkeit des Innenraumes der Blasstation (3) verbessert, die Anordnung der mechanischen Betätigungselemente jedoch aufwendiger.

Gemäß einer weiteren Ausführungsform ist es auch möglich, die gesamte Blasstation (1) vor oder während der Durchführung von Öffnungs- und/oder Schließbewegungen zu verschwenken, um ein Optimum an Zugänglichkeit und Kompaktheit zu erreichen. Gemäß einer weiteren Ausführungsvariante ist es auch möglich, den nicht verschwenkbar gelagerten Formträger (20) verschieblich anzuordnen, um die Durchführung einer Be- und Entladung zu vereinfachen.

Alle vorstehend erläuterten Ausführungsformen können sowohl für eine blastechnische Verformung der Vorformlinge in die Behälter (2) mit ihren Mündungsabschnitten (21) in lotrechter Richtung nach oben orientiert als auch mit ihren Mündungsabschnitten (21) in lotrechter Richtung nach unten orientiert verwendet werden. Ebenfalls können die erläuterten erfindungsgemäßen Varianten mit allen erläuterten Heizeinrichtungen für die Vorformlinge (1) kombiniert werden.

## Patentansprüche

1. Verfahren zur Blasformung von Behältern (2), bei dem Vorformlinge (1) aus einem thermoplastischen Material im Bereich einer Heizstrecke (24) erwärmt und anschließend an eine Blaseinrichtung übergeben werden, in der die Vorformlinge durch Einwirkung eines Blasdruckes innerhalb von Blasformen (4), die aus mindestens zwei Blasformsegmenten bestehen, zu den Behältern (2) umgeformt werden und bei dem die Vorformlinge (1) gemeinsam mit den Blasformen (4) mindestens entlang eines Teiles eines Umlaufweges eines rotierenden Blasrades (25) transportiert werden, **dadurch gekennzeichnet, daß** eine Trennebene (41) der Blasformsegmente mindestens in einem geöffneten Zustand der Blasstation (3) in einer Rotationsrichtung (55) des Blasrades (25) schräg nach vorne weisend derart mit einem Neigungswinkel (43) relativ zu einer radialen Bezugsebene (42) des Blasrades (25) mindestens zeitweilig während der Durchführung eines Übergabevorganges in einer Umfangsrichtung des Blasrades bewegt wird, daß der Neigungswinkel (43) in einem geschlossenen Zustand der Blasstation (3) in einem Winkelbereich von 5 bis 45 Grad relativ zur radialen Bezugsebene (42) positioniert wird, und daß ein Formträger des in einer radialen Richtung des Blasrades (25) weiter außen angeordneten Blasformsegmentes relativ zum Blasrad (25) unbeweglich mit dem Blasrad (25) verbunden und vom Blasrad (25) transportiert wird.

2. Verfahren nach Anspruch 1, **dadurch gekennzeichnet, daß** mindestens ein Blasformsegment um eine vertikale Drehachse (40) verschwenkt wird.

3. Verfahren nach Anspruch 1 oder 2, **dadurch gekennzeichnet, daß** die Blasformsegmente in einer geschlossenen Positionierung der Blasstation mit einer Trennebene (41) schräg zu einer radialen Bezugsebene (42) des Blasrades (25) angeordnet werden.

4. Verfahren nach einem der Ansprüche 1 bis 3, **dadurch gekennzeichnet, daß** eine Verspannung der Blasformsegmente relativ zueinander durch eine pneumatische Verspannung bereitgestellt wird.

5. Verfahren nach einem der Ansprüche 1 bis 4, **dadurch gekennzeichnet, daß** die Positionierung mindestens eines der Blasformsegmente unter Verwendung eines Gelenkhebels durchgeführt wird.

6. Verfahren nach einem der Ansprüche 1 bis 5, **dadurch gekennzeichnet, daß** die Vorformlinge (8) mit ihren Mündungen in lotrechter Richtung nach oben weisend in die Blasstationen (3) eingesetzt werden.

7. Verfahren nach einem der Ansprüche 1 bis 5, **dadurch gekennzeichnet, daß** die Vorformlinge (8) mit ihren Mündungen in lotrechter Richtung nach unten weisend in die Blasstationen (3) eingesetzt werden.

8. Verfahren nach einem der Ansprüche 1 bis 7, **dadurch gekennzeichnet, daß** die Positionierung des mindestens einen Blasformsegmentes unter Verwendung eines Kniehebels durchgeführt wird.

9. Verfahren nach einem der Ansprüche 1 bis 8, **dadurch gekennzeichnet, daß** der Neigungswinkel relativ zur radialen Bezugsebene (42) mit einer Schrägstellung von etwa 15 bis 30 Grad positioniert wird.

10. Verfahren nach einem der Ansprüche 1 bis 9, **dadurch gekennzeichnet, daß** der Neigungswinkel relativ zur radialen Bezugsebene (42) mit einer Schrägstellung von etwa 20 Grad positioniert wird.

11. Vorrichtung zur Blasformung von Behältern (2), die eine Heizstrecke (24) zur Erwärmung von Vorformlingen (1) aus einem thermoplastischen Material aufweist und die mit einer Blaseinrichtung versehen ist, die mindestens eine auf einem Blasrad (25) angeordnete Blasstation (3) zur Umformung der Vorformlinge (1) in die Behälter (2) aufweist, sowie bei der die Blasstation (3) mit Formträgern (19, 20) versehen ist, die jeweils Blasformsegmente haltern und bei der ein erster Formträger relativ zu einem zweiten Formträger um eine Drehachse herum beweglich angeordnet ist, **dadurch gekennzeichnet, daß** eine Trennebene (41) der Blasformsegmente mindestens in einem geöffneten Zustand der Blasstation (3) in einer Rotationsrichtung (55) des Blasrades (25) schräg nach vorne weisend derart mit einem Neigungswinkel (43) relativ zu einer radialen Bezugsebene (42) des Blasrades (25) angeordnet ist, daß der Neigungswinkel (43) in einem geschlossenen Zustand der Blasstation (3) einen Wert im Intervall von 5 Grad bis 45 Grad aufweist, daß ein fest mit dem Blasrad (25) verbundener Formträger (20) schräg zur radialen Bezugsebene (42) angeordnet ist und daß ein in einer radialen Richtung des Blasrades (25) weiter außen liegender Formträger (20) unbeweglich mit dem Blasrad (25) verbunden ist

12. Vorrichtung nach Anspruch 11, **dadurch gekennzeichnet, daß** die Blasstation (3) in einem geschlossenen Zustand mit der Trennebene (41) der Blasformsegmente derart angeordnet ist, daß die Trennebene (41) schräg zur radialen Bezugsebene (42) des Blasrades (25) positioniert ist.

13. Vorrichtung nach einem der Ansprüche 11 oder 12, **dadurch gekennzeichnet, daß** eine Drehachse (40) eines beweglichen Blasformsegmentes im wesentlichen vertikal angeordnet ist.

14. Vorrichtung nach einem der Ansprüche 11 bis 13, **dadurch gekennzeichnet, daß** eine Abstützeinrichtung zur Abstützung des beweglichen Formträgers (19) gegenüber dem Gegenlager (58) als Teil eines Gelenkhebels ausgebildet ist.

15. Vorrichtung nach einem der Ansprüche 11 bis 14, **dadurch gekennzeichnet, daß** die Blasstation (3) zur Aufnahme von mit ihren Mündungsabschnitten (21) in lotrechter Richtung nach oben orientierten Vorformlingen (1) ausgebildet ist.

16. Vorrichtung nach einem der Ansprüche 11 bis 14, **dadurch gekennzeichnet, daß** die Blasstation (3) zur Aufnahme von mit ihren Mündungsabschnitten (21) in lotrechter Richtung nach unten orientierten Vorformlingen (1) ausgebildet ist.

17. Vorrichtung nach einem der Ansprüche 11 bis 16, **dadurch gekennzeichnet, daß** entlang eines Außenumfanges (61) des Blasrades (25) abwechselnd fest mit dem Blasrad (25) verbundene Formträger (20) sowie relativ zum Blasrad (25) beweglich angeordnete Formträger (19) positioniert sind.

18. Vorrichtung nach einem der Ansprüche 11 bis 17, **dadurch gekennzeichnet, daß** die Blasformsegmente relativ zueinander verspannbar angeordnet sind.

19. Vorrichtung nach einem der Ansprüche 11 bis 18, **dadurch gekennzeichnet, daß** der Gelenkhebel als ein Kniehebel ausgebildet ist.

20. Vorrichtung nach einem der Ansprüche 11 bis 19, **dadurch gekennzeichnet, daß** der Neigungswinkel (43) einen Wert im Intervall von 15 Grad bis 30 Grad aufweist.

21. Vorrichtung nach einem der Ansprüche 11 bis 19, **dadurch gekennzeichnet, daß** der Neigungswinkel (43) einen Wert von etwa 20 Grad oder von etwa 25 Grad aufweist.

## Claims

1. A method for the blow moulding of containers (2) wherein preforms (1) made of a thermoplastic material are heated in the area of a heating section (24) and are subsequently delivered to a blowing device in which the preforms are moulded in blow moulds (4) by the action of blowing pressure to form the containers (2), said blow moulds (4) consisting of at least two blow mould segments, and wherein, together with the blow moulds (4), the preforms (1) are transported at least along a part of a circulation path of a rotating blow moulding wheel (25),
**characterised in that**
- at least in an open state of the blowing station (3), a separation plane (41) of the blow mould segments, while pointing forward at an angle in a rotational direction (55) of the blow moulding wheel (25), is moved in relation to a radial reference plane (42) of the blow moulding wheel (25) in a circumferential direction of the blow moulding wheel at least during certain periods of time while the delivery operation is in progress, this being done in such a manner that, in a closed state of the blowing station (3), the angle of inclination (43) is positioned within an angular range of 5 to 45 degrees in relation to the radial reference plane (42), and that a mould carrier of the blow mould segment is connected to the blow moulding wheel (25) in an immobile manner and is transported by the blow moulding wheel (25), said blow mould segment being arranged further out in relation to the blow moulding wheel (25).

2. The method according to Claim 1, **characterised in that** at least one blow mould segment is pivoted about a vertical rotational axis (40).

3. The method according to Claim 1 or 2, **characterised in that**, in a closed positioning of the blowing station, the blow mould segments are arranged with a separation plane (41) at an angle in relation to a radial reference plane (42) of the blow moulding wheel (25).

4. The method according to any one of Claims 1 to 3, **characterised in that** a bracing of the blow mould segments in relation to each other is provided by a pneumatic bracing.

5. The method according to any one of Claims 1 to 4, **characterised in that** the positioning of at least one of the blow mould segments is achieved by using an articulated lever.

6. The method according to any one of Claims 1 to 5, **characterised in that** the preforms (1) are inserted into the blowing stations (3) with their outlets facing up in vertical direction.

7. The method according to any one of Claims 1 to 5, **characterised in that** the preforms (1) are inserted into the blowing stations (3) with their outlets facing down in vertical direction.

8. The method according to any one of Claims 1 to 7, **characterised in that** the positioning of the at least one blow mould segment is achieved by using a toggle lever.

9. The method according to any one of Claims 1 to 8, **characterised in that** the angle of inclination in relation to the radial reference plane (42) is positioned at an inclination of approximately 15 to 30 degrees.

10. The method according to any one of Claims 1 to 9, **characterised in that** the angle of inclination in relation to the radial reference plane (42) is positioned at an inclination of approximately 20 degrees.

11. A device for the blow moulding of containers (2) that comprises a heating section (24) for heating preforms (1) made of a thermoplastic material and that is provided with a blowing device which comprises at least one blowing station (3) arranged on a blow moulding wheel (25) and intended for moulding the preforms (1) to form the containers (2) and wherein the blowing station (3) is provided with mould carriers (19, 20) which each hold blow mould segments and wherein a first mould carrier is arranged such that it is movable about a rotational axis in relation to a second mould carrier, **characterised in that**, at least in an open state of the blowing station (3), a separation plane (41) of the blow mould segments, while pointing forward at an angle in a rotational direction (55) of the blow moulding wheel (25), is arranged in relation to a radial reference plane (42) of the blow moulding wheel (25) in such a way that, in a closed state of the blowing station (3), the angle of inclination (43) comprises a value at an interval of 5 degrees to 45 degrees, that a mould carrier (20) that is permanently connected to the blow moulding wheel (25) is arranged at an angle in relation to the radial reference plane (42), and that a mould carrier (20) that is disposed further out in a radial direction of the blow moulding wheel (25) is connected to the blow moulding wheel (25) in an immobile manner.

12. The device according to Claim 11, **characterised in that**, in a closed state of the separation plane (41) of the blow mould segments, the blowing station (3) is arranged such that the separation plane (41) is positioned at an angle in relation to the radial reference plane (42) of the blow moulding wheel (25).

13. The device according to any one of Claims 11 or 12, **characterised in that** a rotational axis (40) of a movable blow mould segment is arranged in an essentially vertical direction.

14. The device according to any one of Claims 11 to 13, **characterised in that** a supporting device for supporting the movable mould carrier (19) opposite to the counter bearing (58) is formed as a part of an articulated lever.

15. The device according to any one of Claims 11 to 14, **characterised in that** the blowing station (3) is formed for receiving preforms (1) with their outlet sections (21) being oriented upwards in vertical direction.

16. The device according to any one of Claims 11 to 14, **characterised in that** the blowing station (3) is formed for receiving preforms (1) with their outlet sections (21) being oriented downwards in vertical direction.

17. The device according to any one of Claims 11 to 16, **characterised in that**, along an outer circumference (61) of the blow moulding wheel (25), mould carriers (20) permanently connected to the blow moulding wheel (25) are positioned alternately with mould carriers (19) that are arranged in a movable manner in relation to the blow moulding wheel (25).

18. The device according to any one of Claims 11 to 17, **characterised in that** the blow mould segments are arranged such that they can be braced in relation to each other.

19. The device according to any one of Claims 11 to 18, **characterised in that** the articulated lever is formed as a toggle lever.

20. The device according to any one of Claims 11 to 19, **characterised in that** the angle of inclination (43) comprises a value at an interval of 15 degrees to 30 degrees.

21. The device according to any one of Claims 11 to 19, **characterised in that** the angle of inclination (43) comprises a value of approximately 20 degrees or approximately 25 degrees.

## Revendications

1. Procédé de moulage par soufflage de récipients (2), dans le cadre duquel une préformes (1) en un matériau thermoplastique est chauffé dans une zone de chauffage (24) puis remis à un dispositif de soufflage dans lequel les préformes sont transformées en récipients (2) sous l'action d'une pression de soufflage à l'intérieur de moules de soufflage (4) composés d'au moins deux segments de moule, et dans le cadre duquel les préformes et les moules de soufflage (4) sont transportés ensemble le long d'une partie au moins de la révolution d'une roue de soufflage (25) en rotation, **caractérisé en ce que**, au moins en un état ouvert de la station de soufflage (3), un plan de joint (41) des segments de moule de soufflage est, au moins temporairement pendant une opération de transfert, déplacé le long d'un périmètre de la roue de soufflage en étant incliné vers l'avant en sens de rotation (55) de la roue de soufflage (25) avec un angle d'inclinaison (43) par rapport à un plan de référence radial (42) de la roue de soufflage (25) tel que l'angle d'inclinaison (43), en un état fermé de la station de soufflage (3), est positionné pour former un angle de 5 à 45 degrés par rapport au plan de référence radial (42), et **en ce qu'**un support du segment de moule soufflage extérieur en sens radial par rapport à la roue de soufflage (25) est joint à la roue de soufflage (25) de façon à être immobile par rapport à celle-ci et est transporté par la roue de soufflage (25).

2. Procédé selon la revendication 1, **caractérisé en ce qu'**au moins un segment de moule soufflage pivote autour d'un axe de rotation vertical (40).

3. Procédé selon la revendication 1 ou 2, **caractérisé en ce que** les segments de moule soufflage, en un positionnement fermé de la station de soufflage, sont placés de sorte que leur plan de joint (41) soit incliné par rapport à un plan de référence radial (42) de la roue de soufflage (25).

4. Procédé selon l'une des revendications 1 à 3, **caractérisé en ce qu'**un serrage des segments de moule soufflage l'un vers l'autre est assuré par un serrage pneumatique.

5. Procédé selon l'une des revendications 1 à 4, **caractérisé en ce que** le positionnement de l'un au moins des segments de moule soufflage est réalisé au moyen d'un levier articulé.

6. Procédé selon l'une des revendications 1 à 5, **caractérisé en ce que** les préformes (8) sont introduites dans la stations de soufflage (3) verticalement avec leur embouchure tournée vers le haut.

7. Procédé selon l'une des revendications 1 à 5, **caractérisé en ce que** les préformes (8) sont introduites dans la stations de soufflage (3) verticalement avec leur embouchure tournée vers le bas.

8. Procédé selon l'une des revendications 1 à 7, **caractérisé en ce que** le positionnement de l'un au moins des segments de moule soufflage est réalisé au moyen d'un levier coudé.

9. Procédé selon l'une des revendications 1 à 8, **caractérisé en ce que** l'angle d'inclinaison par rapport au plan de référence (42) radial est positionné avec une obliquité d'environ 15 à 30 degrés.

10. Procédé selon l'une des revendications 1 à 9, **caractérisé en ce que** l'angle d'inclinaison par rapport au plan de référence (42) radial est positionné avec une obliquité d'environ 20 degrés.

11. Dispositif de moulage par soufflage de récipients (2) présentant une zone de chauffage (24) pour le réchauffement de préformes (1) en un matériau thermoplastique et équipé d'un dispositif de soufflage présentant au moins une station de soufflage (3) pour la transformation des préformes (1) en récipients (2) agencée sur une roue de soufflage (25), et dont la station de soufflage (3) est équipée de supports de moule (19, 20) maintenant chacun un segments de moule soufflage, un premier support de moule étant agencé de façon à pouvoir pivoter autour d'un axe de rotation par rapport à un second support de moule, **caractérisé en ce que**, au moins en un état ouvert de la station de soufflage (3), un plan de joint (41) des segments de moule de soufflage est incliné vers l'avant en sens de rotation (55) de la roue de soufflage (25) et agencé avec un angle d'inclinaison (43) par rapport à un plan de référence radial (42) de la roue de soufflage (25) tel que l'angle d'inclinaison (43), en un état fermé de la station de soufflage (3), a une valeur comprise dans un intervalle de 5 à 45 degrés, **en ce qu'**un support de moule (20) fixé à la roue de soufflage (25) est agencé selon un plan incliné par rapport au plan de référence radial (42), et **en ce qu'**un support de moule (20) plus extérieur en sens radial par rapport à la roue de soufflage (25) est fixé à la roue de soufflage (25) de façon à être immobile par rapport à celle-ci.

12. Dispositif selon la revendication 11, **caractérisé en ce que** la station de soufflage (3), en un état fermé, est agencée avec le plan de joint (41) des segments de moule soufflage de façon telle que le plan de joint (41) est en position oblique par rapport au plan de référence radial (42) de la roue de soufflage (25).

13. Dispositif selon l'une des revendications 11 ou 12, **caractérisé en ce qu'**un axe de rotation (40) d'un segments de moule soufflage est agencé de façon essentiellement verticale.

14. Dispositif selon l'une des revendications 11 à 13, **caractérisé en ce qu'**un dispositif d'appui destiné à soutenir le support de moule (19) mobile par rapport au palier-support (58) est réalisé sous forme de partie d'un levier articulé.

15. Dispositif selon l'une des revendications 11 à 14, **caractérisé en ce que** la station de soufflage (3) est conformée de façon à accueillir des préformes (1) en position telle que leurs sections d'embouchure (21) soient orientées verticalement vers le haut.

16. Dispositif selon l'une des revendications 11 à 14, **caractérisé en ce que** la station de soufflage (3) est conformée de façon à accueillir des préformes (1) en position telle que leurs sections d'embouchure (21) soient orientées verticalement vers le bas.

17. Dispositif selon l'une des revendications 11 à 16, **caractérisé en ce que** le long de la périphérie (61) de la roue de soufflage (25) sont positionnés en alternance des supports de moule (20) fixés à la roue de soufflage (25) et des supports de moule (19) agencés de façon mobile par rapport à la roue de soufflage (25).

18. Dispositif selon l'une des revendications 11 à 17, **caractérisé en ce que** les segments de moule soufflage sont agencés de façon à pouvoir être serrés l'un vers l'autre.

19. Dispositif selon l'une des revendications 11 à 18, **caractérisé en ce que** le levier articulé est réalisé sous forme de levier coudé.

20. Dispositif selon l'une des revendications 11 à 19, **caractérisé en ce que** l'angle d'inclinaison (43) a une valeur comprise dans un intervalle de 15 à 30 degrés.

21. Dispositif selon l'une des revendications 11 à 19, **caractérisé en ce que** l'angle d'inclinaison (43) a une valeur comprise d'environ 20 ou d'environ 25 degrés.
